# EUROPEAN PATENT SPECIFICATION

(11) **EP 2 570 550 B1**
(45) Date of publication and mention of the grant of the patent: **21.10.2015**
(21) Application number: 11007531.4
(22) Date of filing: 15.09.2011
(51) Int. Cl.: D21H 21/04

(54) **Oxygen treatment of water and pulp from paper or cardboard production**
Sauerstoffbehandlung von Wasser und Pulpe aus der Papier- oder Kartonherstellung
Traitement d'oxygène d'eau et pulpe à partir de production de papier ou de carton

(43) Date of publication of application: 20.03.2013
(73) Proprietor: Linde Aktiengesellschaft, 80331 München (DE)
(72) Inventor: Van de Ven, Joost, 5235 DC's-Hertogenbosch (NL); Schmid, Claudia, 4564 Oberweis (AT)
(74) Representative: Gellner, Bernd

(56) References cited:
- EP-A1- 0 076 788
- EP-A1- 0 741 113
- EP-A1- 2 172 591
- WO-A1-01/83886
- WO-A1-2008/028960
- US-A- 3 876 497

## Description

### FIELD OF THE INVENTION

The present invention relates to the treatment of water and pulp used in the production of paper or cardboard.

### BACKGROUND OF THE INVENTION

In the production of paper and cardboard, significant amounts of water are used. Water is used throughout the process and makes up a large portion of the pulp from which the paper and cardboard is ultimately produced. Most of the water used in the process is recirculated and reused in various stages of the process.

However, the paper and cardboard making process leaves a significant amount of organic compounds, for example, fatty acids in the water, which can lead to both aerobic and anaerobic bacterial growth. The organic matter may result in a bad odor and environmentally unfriendly atmosphere.

EP 2 172 591 A1 discloses a plant for paper production wherein the waste water is alternately treated with carbon dioxide, nitrogen, oxygen, and/or ozone in order to reduce microbiological activity.

EP 0 076 788 A1 discloses the use of substances giving off oxygen in reduction of dark colouring of pulp.

WO 01/83886 A1 relates to a process for controlling microbial growth in a production line for cellulosic products with the aid of gases.

Therefore, there remains a need in the art for improvements to the treatment of water and pulp from paper and cardboard processing.

### SUMMARY OF THE PRESENT INVENTION

The present invention provides improved techniques for treating water and pulp used in a paper or cardboard manufacturing process. According to the present invention, oxygen and nutrients are added to the water or pulp to increase the activity of aerobic bacteria resulting in a reduction of organic substances such as fatty acids.

### DETAILED DESCRIPTION OF THE INVENTION

The present invention provides methods for the treatment of water or pulp from the production of paper or cardboard. In particular, the present invention provides methods of treating water or pulp from paper or cardboard production using oxygen.

The ratio of COD:N:P (where COD is chemical oxygen demand, N is nitrogen containing nutrients such as urea, and P is phosphorus containing nutrients such as phosphoric acid) in water and pulp from a paper making process is important for the growth or survival of aerobic and anaerobic bacteria. In particular, it has been shown that the ratio of COD:N:P should be about 100:5:1 per weight for the treatment of aerobic bacteria, and about 250:5:1 per weight for the treatment of anaerobic bacteria. Therefore, by adjusting the amount of oxygen in the water or pulp, it is possible to control the bacteria activity and levels. Aerobic bacteria requires both oxygen and nutrients (N and P) in order to survive, while anaerobic bacteria dies in the presence of oxygen but requires much lower nutrient levels to survive.

According to the present invention, it is desirable to increase the level of aerobic bacteria without increasing the anaerobic bacteria level, in order for fatty acid concentration in the water or pulp to be reduced. By injecting pure oxygen (O₂) into the water or pulp, this effect can be achieved. As the oxygen level is increased, aerobic bacteria will become more active and plentiful, using the fatty acids as nutrients. As the fatty acid levels decrease, the odor is reduced and the process is therefore more environmentally friendly. In most cases, it may be desirable to also add N and P nutrients (e.g. urea and phosphoric acid) along with the oxygen in order to increase the activity of the aerobic bacteria and therefore also increase the removal of the fatty acids. Concurrently, the increase of oxygen in the water or pulp reduces the level of anaerobic bacteria.

This embodiment of the present invention provides a number of advantages. As noted, the reduction of fatty acids in the water or pulp reduces odor problems and gives a more environmentally friendly process. The metabolization of the fatty acids by the aerobic bacteria results in the production of CO₂ which will stay in the water or pulp and act as a buffer for the paper making process. In addition, the reduction of fatty acids may result in an increase in the pH of the process water which is beneficial to the paper or cardboard making process by reducing calcium levels in the water.

The use of pure oxygen in place of air provides further advantages. In particular, by using pure oxygen it is relatively easy to raise the O₂ concentration in the water or pulp to high levels, e.g. 15 to 20 mg/l or higher. In addition, oxygen dissolves completely in the water or pulp. Conversely, using air to raise the oxygen concentration requires a very large volume of air be used and may only raise O₂ concentration to a maximum of about 3 to 7 mg/l. This amount of air can have deleterious effects on the paper making process. In particular, CO₂ and other helpful compounds in the water or pulp may be stripped out. Further, because of the high amount of nitrogen in the air (78%) which does not as readily dissolve in the water and pulp, bubbles and micro bubbles may be present in the pulp, and cavitations in the pump or other lower pressure areas may occur.

This first embodiment of the present invention may be used throughout the paper or cardboard making process, but may provide the most beneficial results in the recirculated process water or storage tanks therefore.

The following experimental results show the usefulness of the present invention.

Experiment 1: Process water from a cardboard mill was placed in a small tank and the O₂ level was raised to 20 mg/l by direct injection of pure oxygen. Over a period of 15 hours, the O₂ concentration was measured and showed a very low decrease, indicating that bacteria respiration rates were also very low. In particular, the slight decrease in O₂ concentration over the course of the experiment is probably due to initial aerobic bacterial activity that ceases upon the consumption of all of the nutrients available. Anaerobic bacteria activity is inhibited so new nutrients are not formed resulting in the destruction of both anaerobic and aerobic bacteria.

Experiment 2: 8 liters of process water from a cardboard mill having an initial O₂ concentration of 3 to 4 mg/l was placed in a small tank. O₂ was added and the concentration of O₂ was raised to about 15.5 mg/l. Over a period of 12 hours, the O₂ concentration was measured and showed a very low decrease to about 9 mg/l, mostly occurring in the first hours of the experiment. This again shows that bacteria respiration rates were very low. The initial decrease can again be attributed to initial aerobic bacterial activity that ceases upon the consumption of all of the nutrients available. Anaerobic bacteria activity is inhibited so new nutrients are not formed resulting in the destruction of both anaerobic and aerobic bacteria.

Experiment 3: 8 liters of pulp from a cardboard mill having an initial O₂ concentration of 3 to 4 mg/l was placed in a small tank. O₂ was added and the concentration of O₂ was raised to about 18.5 mg/l. Over a period of 12 hours, the O₂ concentration was measured and showed a decrease to about 9.8 mg/l, mostly occurring in the first hours of the experiment. It is again believed that bacteria respiration rates were very low. The higher consumption of O₂ in the pulp as compared to the process water is probably caused by initial low levels of O₂ in the fiber material of the pulp. In particular, fibers are generally clogged together so that within the fiber particles, a lower concentration of oxygen is present, allowing anaerobic bacteria to continue to be active and create fatty acids that provide nutrients for aerobic bacteria in the rest of the pulp solution. However, over time, the O₂ gradually seeps into the fibers destroying the anaerobic bacteria and eventually also slowing aerobic bacteria activity.

The injection of oxygen into several locations of the paper making process may be beneficial, as this could help even out the destruction of the anaerobic bacteria throughout the process. In particular, oxygen can be added to the pulp flow, dilution water, or into the mixing chest. Oxygen injection can be done by any one of several dosing systems, including the SOLVOX system available from Linde AG.

The present invention provides improved techniques for treating water and pulp used in a paper or cardboard manufacturing process. By addition oxygen and nutrients to the water or pulp and increase in the activity of aerobic bacteria resulting in a reduction of organic substances such as fatty acids can be achieved.

It is anticipated that other embodiments and variations of the present invention will become readily apparent to the skilled artisan in the light of the foregoing description, and it is intended that such embodiments and variations likewise be included within the scope of the invention as set out in the appended claims.

## Claims

1. A method of treating water or pulp from a paper or cardboard manufacturing process, the method comprising:
adding pure oxygen and nutrients along with pure oxygen into the water or pulp, wherein the nutrients are nitrogen or phosphorus containing nutrients.

2. The method of claim 1 wherein the nutrient is urea.

3. The method of claim 1 wherein the nutrient is phosphoric acid.

4. The method of claim 1 wherein the addition of oxygen to the water or pulp raises the oxygen concentration in the water or pulp to between 15 mg/l and 20 mg/l.

5. The method of claim 1 wherein the addition of oxygen to the water or pulp raises the ratio of COD:N:P wherein COD is chemical oxygen demand, N is nitrogen containing nutrients and P is phosphorus containing nutrients, to between 100:5:1 per weight and 250:5:1 per weight.

6. The method of claim 1 wherein the method is applied to recirculated water or water storage tanks.

7. A method according to claim 1, wherein the levels of aerobic and anaerobic bacteria in water or pulp from a paper or cardboard manufacturing process are controlled.

8. The method of claim 7 wherein growth of the aerobic and the anaerobic bacteria is inhibited.

9. The method of claim 7 wherein the addition of oxygen to the water or pulp raises the oxygen concentration in the water or pulp to between 15 mg/l and 20 mg/l.

10. The method of claim 7 wherein the method is applied to pulp storage tanks or dilution water.

11. A method according to claim 1, wherein the level of fatty acids in water or pulp from a paper or cardboard manufacturing process is reduced.

## Patentansprüche

1. Verfahren zur Behandlung von Wasser oder Faserstoff aus einem Papier- oder Kartonherstellungsprozess, wobei das Verfahren umfasst:
Zugeben von reinem Sauerstoff und Nährstoffen zusammen mit reinem Sauerstoff in das Wasser oder den Faserstoff, wobei die Nährstoffe stickstoff- oder phosphorhaltige Nährstoffe sind.

2. Verfahren nach Anspruch 1, wobei der Nährstoff Harnstoff ist.

3. Verfahren nach Anspruch 1, wobei der Nährstoff Phosphorsäure ist.

4. Verfahren nach Anspruch 1, wobei die Zugabe von Sauerstoff zum Wasser oder Faserstoff die Sauerstoffkonzentration im Wasser oder Faserstoff auf 15 mg/l bis 20 mg/l erhöht.

5. Verfahren nach Anspruch 1, wobei die Zugabe von Sauerstoff zum Wasser oder Faserstoff das Massenverhältnis von CSB:N:P auf 100:5:1 bis 250:5:1 erhöht, wobei CSB der chemische Sauerstoffbedarf ist, N stickstoffhaltige Nährstoffe sind und P phosphorhaltige Nährstoffe sind.

6. Verfahren nach Anspruch 1, wobei das Verfahren auf zurückgeführtes Wasser oder Wasserspeicherbehälter angewendet wird.

7. Verfahren nach Anspruch 1, wobei der Gehalt an aeroben und anaeroben Bakterien im Wasser oder Faserstoff aus einem Papier- oder Kartonherstellungsprozess gesteuert wird.

8. Verfahren nach Anspruch 7, wobei das Wachstum der aeroben und der anaeroben Bakterien gehemmt wird.

9. Verfahren nach Anspruch 7, wobei die Zugabe von Sauerstoff zum Wasser oder Faserstoff die Sauerstoffkonzentration im Wasser oder Faserstoff auf 15 mg/l bis 20 mg/l erhöht.

10. Verfahren nach Anspruch 7, wobei das Verfahren auf Faserstoffspeicherbehälter oder Verdünnungswasser angewendet wird.

11. Verfahren nach Anspruch 1, wobei der Gehalt an Fettsäuren im Wasser oder Faserstoff aus einem Papier- oder Kartonherstellungsprozess reduziert wird.

## Revendications

1. Méthode de traitement d'eau ou de pâte issue d'un procédé de fabrication de papier ou de carton, la méthode comprenant :
l'addition d'oxygène pur et de nutriments conjointement avec de l'oxygène pur dans l'eau ou la pâte, où les nutriments sont des nutriments azotés ou phosphorés.

2. Méthode selon la revendication 1, **caractérisée en ce que** le nutriment est l'urée.

3. Méthode selon la revendication 1, **caractérisée en ce que** le nutriment est l'acide phosphorique.

4. Méthode selon la revendication 1, **caractérisée en ce que** l'addition d'oxygène à l'eau ou à la pâte augmente la concentration en oxygène dans l'eau ou la pâte jusqu'à une valeur comprise entre 15 mg/l et 20 mg/l.

5. Méthode selon la revendication 1, **caractérisée en ce que** l'addition d'oxygène à l'eau ou à la pâte augmente le rapport COD:N:P où COD représente la demande en oxygène chimique, N représente les nutriments azotés et P représente les nutriments phosphorés, jusqu'à une valeur comprise entre 100:5:1 en poids et 250:5:1 en poids.

6. Méthode selon la revendication 1, **caractérisée en ce que** la méthode est appliquée à de l'eau en recirculation ou des cuves de stockage d'eau.

7. Méthode selon la revendication 1, **caractérisée en ce que** les taux de bactéries aérobies et anaérobies dans de l'eau ou de la pâte issue d'un procédé de fabrication de papier ou de carton sont contrôlés.

8. Méthode selon la revendication 7, **caractérisée en ce que** la croissance des bactéries aérobies et anaérobies est inhibée.

9. Méthode selon la revendication 7, **caractérisée en ce que** l'addition d'oxygène à l'eau ou à la pâte augmente la concentration en oxygène dans l'eau ou la pâte jusqu'à une valeur comprise entre 15 mg/l et 20 mg/l.

10. Méthode selon la revendication 7, **caractérisée en ce que** la méthode est appliquée à des cuves de stockage de pâte ou de l'eau de dilution.

11. Méthode selon la revendication 1, **caractérisée en ce que** le taux en acides gras dans de l'eau ou de la pâte issue d'un procédé de fabrication de papier ou de carton est réduit.
